# EUROPEAN PATENT SPECIFICATION

(11) **EP 4 156 731 B1**
(45) Date of publication and mention of the grant of the patent: **14.10.2026**
(21) Application number: 21808780.7
(22) Date of filing: 13.05.2021
(51) Int. Cl.: H04W 4/06, H04W 8/18, H04W 76/10, H04W 92/24

(54) **METHOD AND APPARATUS FOR JOINING MULTICAST BROADCAST SERVICE (MBS) SESSION**
VERFAHREN UND VORRICHTUNG ZUR TEILNAHME AN EINER MBMS-SITZUNG
PROCÉDÉ ET APPAREIL DE CONNEXION À UNE SESSION DE SERVICE DE MULTIDIFFUSION DIFFUSION (MBS)

(30) Priority: 22.05.2020 CN 202010441153
(43) Date of publication of application: 29.03.2023
(73) Proprietor: Datang Mobile Communications Equipment Co., Ltd., Beijing 100085 (CN)
(72) Inventor: DUAN, Xiaoyan, Beijing 100085 (CN)
(74) Representative: Ipsilon
(86) International application number: PCT/CN2021/093586
(87) International publication number: WO 2021/233196

(56) References cited:
- EP-A1- 3 737 126
- WO-A1-2019/157942
- WO-A1-2020/035129
- WO-A1-2020/071847
- CN-A- 110 366 131
- CN-A- 110 661 638
- CN-A- 110 972 078
- US-A1- 2019 158 985
- US-A1- 2020 092 923
- US-A1- 2022 046 752
- CATT: "KI #1, New Sol: MBS session joining via PDU session establishment and modification procedures", 3GPP DRAFT; S2-2004176, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20200601 - 20200612, 22 May 2020 (2020-05-22), Mobile Competence Centre ; 650, route des Lucioles ; F-06921 Sophia-Antipolis Cedex ; France , XP051890180
- QUALCOMM INCORPORATED, NOKIA, NOKIA SHANGHAI BELL: "Solution: Integrated Multicast and Unicast Transport with Full Separation of MBS Service", 3GPP DRAFT; S2-2001705, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Incheon, South Korea; 20200113 - 20200117, 27 January 2020 (2020-01-27), Mobile Competence Centre ; 650, route des Lucioles ; F-06921 Sophia-Antipolis Cedex ; France , XP051845603
- "3rd Generation Partnership Project; Technical Specification Group Services and System Aspects; Study on architectural enhancements for 5G multicast-broadcast services (Release 17)", 3GPP STANDARD; TECHNICAL REPORT; 3GPP TR 23.757, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.3.0, 29 January 2020 (2020-01-29), Mobile Competence Centre ; 650, route des Lucioles ; F-06921 Sophia-Antipolis Cedex ; France , pages 1 - 37, XP051860857

## Description

### Cross-Reference of Related Applications

The present application claims the priority of Chinese Patent Application No. 202010441153.5, filed with the China National Intellectual Property Administration on May 22, 2020 and entitled "Method and Apparatus for Joining Multicast Broadcast Service (MBS) Session".

### Field

The present application relates to the field of wireless communication technologies, and provides a method and apparatus for joining an Multicast Broadcast Service (MBS) session.

### Background

The Fifth Generation Mobile Networks (5G) support the Multicast Broadcast Service (MBS), to implement data transmission of Internet Protocol Version 4 (IPv4)/Internet Protocol Version 6 (IPv6) multicast/broadcast, Internet Protocol Television (IPTV) and other services, or optimize the transmission efficiency and the network resource usage efficiency of group communication, Internet of things (IoT) communication, Vehicle to Everything (V2X) communication and other services. In order to realize the above functions, the 5G need to join a User Equipment (UE) with the MBS requirement into the MBS session.

According to the third Generation Partner Project (3GPP) standard, the Access and Mobility Management Function (AMF) receives a request message sent by the UE to join the MBS session, and selects the Session Management Function (SMF) serving the Protocol Data Unit (PDU) session and MBS session for the UE, so that the UE can join the MBS session and receive the MBS data sent by the User Plane Function (UPF) through the PDU session channel.

However, the use of the above method to join the MBS session will cause the following problem: when different AMFs receive request messages sent by a plurality of UEs to join a same MBS session, different AMFs may choose different SMFs and join the corresponding UEs into the same MBS session, and then a plurality of SMFs serve the same MBS session, so that the management of the MBS session is complicated and even the MBS data cannot be sent to the UEs normally.

In view of this, the embodiments of the present application provide a new method for joining an MBS session.

A document (US2020/092923 A1) relates to methods, systems, and devices for wireless communications are described. A user equipment (UE) may transmit a request to establish a multicast session. The request may identify a multicast service session including a multicast quality of service flow. The UE may receive, from a base station wirelessly communicating with the UE, an indication of communication resources for the UE to use to receive multicast packets of the multicast service session from a content provider via a tunnel between a first network node and the base station. The tunnel may be established for the multicast service session based on identifying that the multicast service session lacks an existing tunnel between the first network node and the base station. The UE may identify a discontinuous reception (DRX) cycle for the multicast service session, and receive the multicast packets from the base station according to the indicated communication resources and the identified DRX cycle.

A document (WO2020/071847 A1) relates to a method and apparatus for providing group communication in a wireless communication system. According to an embodiment, a method for supporting, by means of a network exposure function (NEF), a group communication service in a wireless communication system comprises the steps of: receiving, from an application function (AF), a message that requests a setting of a group including an ID of the AF and an external group ID of the group; and transmitting the message that requests the setting of the group to a unified data management (UDM), wherein on the basis of the setting of the group, at least one of creating the group, deleting the group, adding a member to the group, or deleting a member from the group may be performed.

A document (US2019/158985 A1) relates to a method of MB delivery of Downlink (DL) MB Data to a plurality of Electronic Devices (EDs) connected to a (Radio) Access Network (R) AN node, the method includes: storing the DL MB Data in a buffer of the (R) AN node; and transmitting, by the (R) AN node, the DL MB Data to the plurality of EDs.

A document (WO2019/157942 A1) relates to a communication method and a communication apparatus. The communication method includes: a network storage network element receives a first request message from a mobility management network element, the first request message carrying the data network name of a session requested to be established by a terminal device; the network storage network element determines, according to the first request message, at least one target session management element from among session management network elements supporting the data network name; the network storage network element sends the identifier of the at least one target session management element to the mobility management network element. The communication method and the communication apparatus in the embodiments of the present application can select a session management network element to provide a service for the session of a terminal device.

### Brief Summary

Embodiments of the present application provide a method and apparatus for joining an MBS session, so as to solve the problem of complex MBS session management.

In a first aspect, embodiments of the present application provide a method for joining an MBS session, performed by a network device. The method includes:
receiving, by the network device, MBS information sent by a UE;
determining, by the network device, information of a first SMF that currently serves an MBS session corresponding to the MBS information according to the MBS information; and
sending, by the network device, the MBS information to the first SMF according to the information of the first SMF;
the determining, by the network device, the first SMF that currently serves the MBS session corresponding to the MBS information according to the MBS information, includes:
   sending, by the network device, a fourth request message including the MBS information to an NRF to query the NRF for the first SMF that currently serves the MBS session corresponding to the MBS information; and
   receiving, by the network device, the information of the first SMF sent by the NRF;
   the fourth request message includes first information that includes some or all of:
      network slice information, a data network name, a public land mobile network identifier, service area information.

Optionally, the network device is an AMF.

The receiving, by the network device, the MBS information sent by the UE, includes:
receiving, by the AMF, a first request message including the MBS information sent by the UE; or
receiving, by the AMF, a second request message including the MBS information sent by a second SMF.

The second SMF is an SMF serving a PDU session of the UE.

Optionally, the network device is a second SMF. The second SMF is an SMF serving a PDU session of the UE.

The receiving, by the network device, the MBS information sent by the UE, includes:
receiving, by the second SMF, the MBS information sent by the UE; or
receiving, by the second SMF, a third request message including the MBS information sent by a UPF.

The third request message is generated by the UPF based on the MBS information sent by the UE through the PDU session.

Optionally, if the first SMF that currently serves the MBS session corresponding to the MBS information does not exist, the method further includes:
sending, by the network device, a fourth request message including the MBS information to an NRF; and
sending, by the network device, the MBS information to a third SMF according to information of the third SMF provided by the NRF, so that the third SMF handles the UE joining into the MBS session.

The third SMF has an MBS capability.

Optionally, the network device is the AMF.

The sending, by the network device, the MBS information to the first SMF according to the information of the first SMF sent by the NRF, includes:
sending, by the AMF, the MBS information to the first SMF according to the information of the first SMF if a service area of the first SMF includes an area where the UE is located; or
sending, by the AMF, the information of the first SMF and the MBS information to an intermediate SMF if a service area of the first SMF does not include an area where the UE is located, so that the intermediate SMF sends the MBS information to the first SMF according to the information of the first SMF.

A service area of the intermediate SMF includes the area where the UE is located.

Optionally, the network device is a second SMF.

The sending, by the network device, the MBS information to the first SMF, includes:
sending, by the second SMF, the information of the first SMF and the MBS information to an AMF, so that the AMF sends the MBS information to the first SMF.

Optionally, the MBS information includes some or all of:
an MBS multicast address, a temporary mobile group identity, an MBS session identifier.

In a second aspect, embodiments of the present application further provide a method for joining an MBS session, performed by an NRF. The method includes:
receiving, by the NRF, fourth request message comprising MBS information sent by a network device;
determining, by the NRF, a first SMF according to the MBS information and stored SMF information, wherein the first SMF is an SMF that currently serves an MBS session corresponding to the MBS information; and
providing, by the NRF, information of the first SMF to the network device;
the fourth request message includes first information that includes some or all of:
   network slice information, a data network name, a public land mobile network identifier, service area information;
   before the NRF receives the MBS information sent by the network device, the method further includes:
      receiving, by the NRF, a fifth request message sent by the first SMF, wherein the fifth request message is used to register or update the information of the first SMF, and the information of the first SMF includes information of the MBS session.

Optionally, the method further includes:
providing, by the NRF, information of a third SMF with an MBS capability to the network device if there is no SMF currently serving the MBS session corresponding to the MBS information, so that the network device handles the UE joining into the MBS session through interactions with the third SMF.

In a third aspect, embodiments of the present application further provide an electronic device including a processor and a memory, wherein the memory stores program codes, which cause the processor to perform the steps of any above method for joining the MBS session when executed by the processor.

The present application has the following beneficial effects.

In the methods and apparatuses for joining the MBS session provided in the embodiments of the present application, the network device determines, according to the MBS information sent by the UE, the information of the first SMF that currently serves the MBS session corresponding to the MBS information through the NRF, and the network device then sends the MBS information to the first SMF according to the information of the first SMF, so that the first SMF handles the UE joining into the MBS session. In this way, the network device obtains the SMF that currently serves the MBS session by querying, so that one MBS session is only served by one SMF, avoiding the situation that a plurality of SMFs serve the same MBS session, and simplifying the MBS session management.

### Brief Description of the Drawings

The accompanying drawings illustrated here are used to provide further understanding of the present application and constitute a part of the present application. The schematic embodiments of the present application and the illustration thereof are used to explain the present application but not limit the present application improperly. In the accompanying drawings:
FIG. 1 is an architecture schematic diagram of a mobile communication system in an embodiment of the present application;
FIG. 2 is a schematic flowchart of joining an MBS session in an embodiment of the present application;
FIG. 3 is a schematic flowchart of Embodiment 1 in the embodiments of the present application;
FIG. 4 is a schematic flowchart of Embodiment 2 in the embodiments of the present application;
FIG. 5 is a schematic flowchart of Embodiment 3 in the embodiments of the present application;
FIG. 6 is a structural schematic diagram of an apparatus for joining an MBS session applied to a network device according to an embodiment of the present application;
FIG. 7 is a structural schematic diagram of an apparatus for joining an MBS session applied to the NRF according to an embodiment of the present application;
FIG. 8 is a structural schematic diagram of an apparatus for joining an MBS session applied to the SMF according to an embodiment of the present application;
FIG. 9 is a structural schematic diagram of an electronic device in an embodiment of the present application.

### Detailed Description of the Embodiments

In order to make the purposes, technical solutions and advantages of the embodiments of the present application clearer, the technical solution of the present application will be described clearly and completely below in combination with the accompanying drawings in the embodiments of the present application. Obviously the described embodiments are a part of the embodiments of the technical solution of the present application but not all the embodiments. Based upon the embodiments recorded in the present application document, all of other embodiments obtained by those ordinary skilled in the art without creative work pertain to the protection scope of the technical solution of the present application.

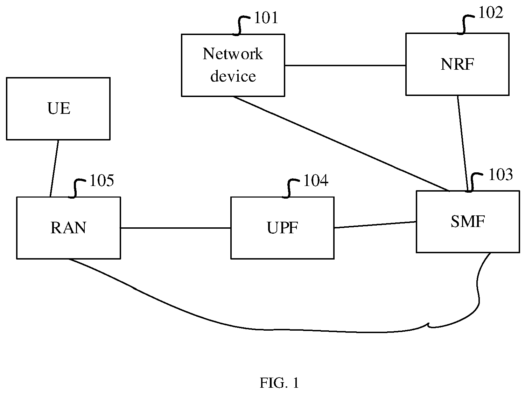

Referring to FIG. 1, embodiments of the present application provide a mobile communication system, which at least includes a network device 101, a Network Repository Function (NRF) 102, an SMF 103, a UPF 104, and a Radio Access Network (RAN) 105.

The network device 101 is configured to receive a request message to join an MBS sent by a UE, and query the NRF according to the MBS information carried in the request message to obtain the SMF currently serving an MBS session corresponding to the MBS information.

The NRF 102 is configured to determine the SMF currently serving the MBS session corresponding to the MBS information according to the MBS information sent by the network device 101 and stored SMF information.

The SMF 103 is configured to serve the PDU session and the MBS session of the UE. For example, the SMF 103 sends a Session Management (SM) message to the UPF serving the MBS session through the N4 interface. The SM message includes the updated MBS related information. The related information includes but is not limited to the MBS Quality of Service flow (MBS QoS flow) information, and the information of a tunnel for receiving the MBS data. The SMF 103 sends an SM message to the RAN through the N2 interface, so that the RAN configures the tunnel for receiving the MBS data from the UPF and radio resources for communicating the MBS data with the UE according to the received SM message. The SMF 103 sends an SM message to the UE through the N1 interface, so that the UE determines to start receiving the MBS data according to the SM message.

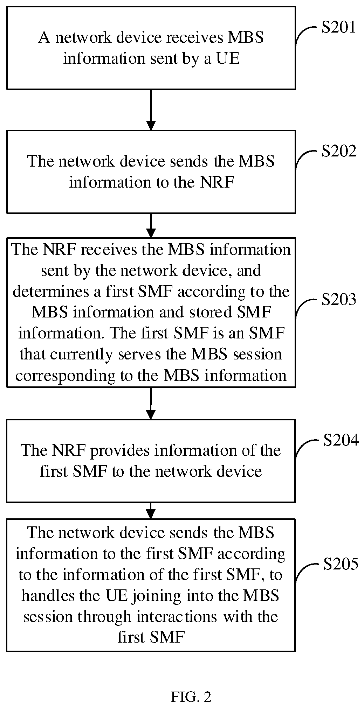

Referring to FIG. 2, embodiments of the present application provide a schematic flowchart of joining an MBS session.

S201: a network device receives MBS information sent by a UE.

The MBS information characterizes the identification information of the MBS session that the UE requests to join. The MBS information in the embodiments of the present application includes some or all of:
an MBS Multicast Address; a Temporary Mobile Group Identity (TMGI) that includes an MBS service identifier; an MBS Session ID.

S202: the network device sends the MBS information to the NRF.

S203: the NRF receives the MBS information sent by the network device, and determines a first SMF according to the MBS information and stored SMF information. The first SMF is an SMF that currently serves the MBS session corresponding to the MBS information.

Here, before step 203 is performed, the SMF registers or updates the information of the SMF with the NRF when establishing the MBS session. The information of the SMF includes the information of the MBS session. Further, the SMF, when releasing the MBS session, requests the NRF to update the information of the SMF. The step of updating the information of the SMF includes: deleting the information of the MBS session from the information of the SMF. In this way, the NRF can determine the SMF that currently serves the MBS session corresponding to the MBS information according to the information of the SMF.

The information of the MBS session characterizes the information that the SMF currently serves the MBS session. In embodiments of the present application, the information of the MBS session may include some or all of: MBS multicast address, TMGI, MBS session identifier.

S204: the NRF provides the information of the first SMF to the network device.

S205: the network device sends the MBS information to the first SMF according to the information of the first SMF, so that the first SMF handles the UE joining into the MBS session.

Among the embodiments of the present application, three embodiments, describing the process of joining the MBS session by the UE, are provided for the scenarios in which the UE requests to establish a PDU session and has established a PDU session when the UE initiates a request message to join the MBS.

Embodiment 1: When the UE requests to establish a PDU session, the AMF selects the SMF serving the PDU session and the MBS session.

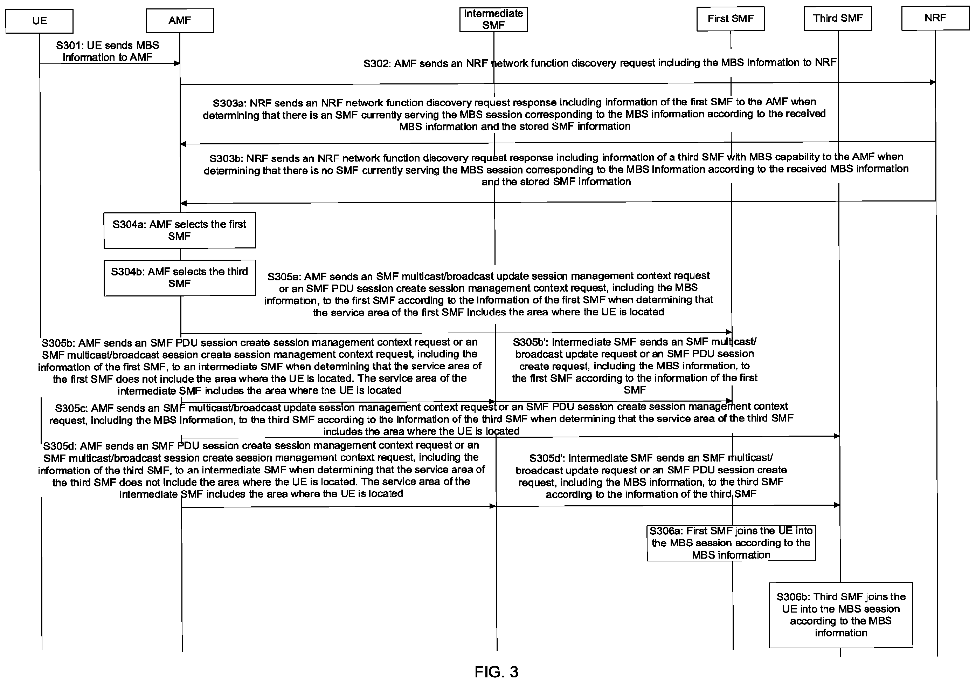

Referring to FIG. 3, a schematic flowchart of Embodiment 1 is provided.

S301: the UE sends an uplink non-access stratum transport message carrying the MBS information to the AMF.

For example, the UE sends an Uplink Non-Access Stratum Transport (UL NAS Transport) message to the AMF, and the UL NAS Transport message carries the MBS information and an SM message. The SM message here includes a PDU session establishment request. The MBS information characterizes the identification information of the MBS session that the UE requests to join. The MBS information is provided by the MBS Content Provider (CP) or Application Server (AS) to the UE. The MBS information may be some or all of: MBS multicast address, TMGI, MBS session identifier.

S302: the AMF sends an NRF network function discovery request including the MBS information to the NRF.

For example, the AMF initiates an NRF network function discovery request (Nnrf_NFDiscovery_Request) to the NRF. The Nnrf_NFDiscovery_Request is used to query the first SMF that currently serves the MBS session corresponding to the MBS information. The Nnrf_NFDiscovery_Request carries the NF type and the MBS information provided by the UE. In addition, the Nnrf_NFDiscovery_Request can also carry the MBS capability indication information and the first information. The MBS capability indication information is used to request the SMF with the MBS capability, and the first information is used to limit the service scope of the requested SMF. The first information includes some or all of: network slice information, Data Network Name (DNN), Public Land Mobile Network ID (PLMN ID), and service area information.

The network slice information includes a Single Network Slice Selects Auxiliary Information (S-NSSAI) and Network Slice Instance ID (NSI). The service area information includes a Tracking Area Identifier (TAI) and a TAI List (that is, a plurality of TAIs). In this way, it can be ensured that only one SMF is used to provide services for the MBS session of a specific MBS within the service range specified above, while other SMFs can provide services for the MBS session of the specific MBS outside the service range, thereby avoiding the situation where an SMF is difficult to manage the MBS session in all ranges due to limitation on its own service area or too great load.

S303a: the NRF sends an NRF network function discovery request response including the information of the first SMF to the AMF when determining that there is an SMF currently serving the MBS session corresponding to the MBS information according to the received MBS information and the stored SMF information.

Before step 303a is performed, the SMF initiates the NRF network function management registration (Nnrf_NFManagement_NFRegister) containing the information of the registered SMF or the NRF network function management information update (Nnrf_NFManagement_NFUpdate) containing the information of the updated SMF to the NRF when establishing the MBS session. The information of the SMF includes the information of the MBS session. The SMF initiates Nnrf_NFManagement_NFUpdate containing the information of the updated SMF to the NRF when releasing the MBS session. The step of updating the information of the SMF includes: deleting the information of the MBS session from the information of the SMF. In this way, the NRF can determine the SMF that currently serves the MBS session corresponding to the MBS information according to the information of the SMF. The SMF can obtain the information of the MBS session in any of the following ways.
(1) The MBS information is provided by the CP or AS of the MBS to the UE. Then the MBS information is provided by the UE to the SMF when the UE initiates a first request message to join the MBS session.
(2) The MBS information is directly configured by the CP or AS for the SMF, or is configured by the CP or AS for the SMF through Network Exposure Function (NEF).
(3) The CP or AS sends the MBS information to the MBS control plane function entity, and then the MBS control plane function entity configures the information of the MBS session to the SMF. The MBS control plane function entity may be MBS Function (MBSF) or MBS Function-Control Plane (MSF-C).

In addition, the information of the SMF may also include the identification information of the SMF, the network slice information served by the SMF, the DNN and the service area information. The identification information may include SMF ID, SMF FQDN, IP Address and PLMN ID. The network slice information served by the SMF may include S-NSSAI and NSI. The service area information may include TAI and TAI List.

When step 303a is executed, the NRF matches the MBS information sent by the AMF with the information of the MBS session in the information of the SMF, and determines the matched SMF as the first SMF.

Alternatively, the NRF matches the MBS information, the MBS capability indication information and the first information sent by the AMF with the information of the SMF, and determines the matched SMF as the first SMF.

Then, the NRF obtains the information of the first SMF. The information of the first SMF includes the identification information of the SMF, and may also include the information of the MBS session currently served by the SMF.

Finally, the NRF sends an Nnrf_NFDiscovery_Request response containing the information of the first SMF to the AMF.

S303b: the NRF sends an NRF network function discovery request (Nnrf_NFDiscovery_Request) response including the information of a third SMF with MBS capability to the AMF when determining that there is no SMF currently serving the MBS session corresponding to the MBS information according to the received MBS information and the stored SMF information.

Before step 303b is performed, the SMF registers or updates the information of the SMF with the NRF when establishing the MBS session. The information of the SMF includes the information of the MBS session. The SMF requests the NRF to update the information of the SMF when releasing the MBS session, where the step of updating the information of the SMF includes: deleting the information of the MBS session from the information of the SMF. The specific operation method has been described above and will not be repeated here.

When performing step 303b, the NRF needs to screen out all the third SMFs with MBS capability from the registered SMFs, so the number of third SMFs may be one or more. The information of the third SMF includes at least the identification information of the SMF and the information indicating that the SMF has the MBS capability.

S304a: the AMF selects the first SMF.

Currently, there is only one SMF serving the MBS session, so the AMF directly selects the first SMF and performs the subsequent operation that the UE joins the MBS session.

S304b: the AMF selects a third SMF.

When step 304b is performed, if the NRF only provides the information of one third SMF, the AMF can directly select the third SMF; if the NRF provides the information of multiple third SMFs, the AMF can select a third SMF according to a preset local strategy.

Then, the selected third SMF may update information to the NRF, to add the information of the MBS session to the information of the third SMF. The specific adding method has been described above and will not be repeated here.

S305a: the AMF sends an SMF multicast/broadcast update session management context request or an SMF PDU session create session management context request, including the MBS information, to the first SMF according to the information of the first SMF when determining that the service area of the first SMF includes the area where the UE is located.

In step 305a, the AMF sends the SMF multicast/broadcast update session management context (Nsmf_MBSSession_UpdateSMContext) request or SMF PDU session create session management context (Nsmf_PDUSession_CreateSMContext) request to the first SMF. The Nsmf_MBSSession_UpdateSMContext request or Nsmf_PDUSession_CreateSMContext request carries the identification information of the UE, the MBS information and other information for the UE to join into the MBS session.

S305b: the AMF sends an SMF PDU session create session management context (Nsmf_PDUSession_CreateSMContext) request or an SMF multicast/broadcast session create session management context (Nsmf_MBSSession_CreateSMContext) request, including the information of the first SMF, to an intermediate SMF when determining that the service area of the first SMF does not include the area where the UE is located. The service area of the intermediate SMF includes the area where the UE is located.

When the service area of the first SMF does not include the area where the UE is located, the AMF cannot directly access the first SMF, and the AMF can transmit the MBS information to the first SMF through an intermediate SMF with the MBS capability. The service area of the intermediate SMF includes the area where the UE is located. The Nsmf_PDUSession_CreateSMContext request or Nsmf_MBSSession_CreateSMContext request carries the identification information of the UE, the MBS information and other information for the UE to join into the MBS session.

The AMF may select a SMF with the MBS capability from the locally configured SMFs as the intermediate SMF; or may query the NRF for a SMF that can serve the area where the UE is located and has the MBS capability as the intermediate SMF. Then, the intermediate SMF needs to update information to the NRF, to add the information of the MBS session to the information of the intermediate SMF. The specific adding method has been described above and will not be repeated here.

S305b': the intermediate SMF sends an SMF multicast/broadcast update request or an SMF PDU session create request including the MBS information to the first SMF according to the information of the first SMF.

The intermediate SMF sends an SMF multicast/broadcast update (Nsmf_MBSSession_Update) request or an SMF PDU session create (Nsmf_PDUSession_Create) request to the first SMF.

S305c: the AMF sends an SMF multicast/broadcast update session management context (Nsmf_MBSSession_UpdateSMContext) request or an SMF PDU session create session management context (Nsmf_PDUSession_CreateSMContext) request, including the MBS information, to the third SMF according to the information of the third SMF when determining that the service area of the third SMF includes the area where the UE is located.

S305d: the AMF sends an SMF PDU session create session management context (Nsmf_PDUSession_CreateSMContext) request or an SMF multicast/broadcast session create session management context (Nsmf_MBSSession_CreateSMContext) request, including the information of the third SMF, to an intermediate SMF when determining that the service area of the third SMF does not include the area where the UE is located. The service area of the intermediate SMF includes the area where the UE is located.

S305d': the intermediate SMF sends an SMF multicast/broadcast update (Nsmf_MBSSession_Update) request or an SMF PDU session create (Nsmf_PDUSession_Create) request, including the MBS information, to the third SMF according to the information of the third SMF.

S306a: the first SMF handles the UE joining into the MBS session according to the MBS information.

For example, the first SMF sends an SM message to the UPF serving the MBS session through the N4 interface. The SM message includes the updated MBS related information. The related information includes but is not limited to the MBS QoS flow information, and the information of a tunnel for receiving the MBS data. The first SMF sends an SM message to the RAN through the N2 interface, so that the RAN configures the tunnel for receiving the MBS data from the UPF and radio resources for communicating the MBS data with the UE according to the received SM message. The first SMF sends an SM message to the UE through the N1 interface, so that the UE determines to start receiving the MBS data according to the SM message.

After the first SMF releases the MBS session, there is a need to update information to the NRF, to delete the information of the MBS session from the information of the first SMF.

S306b: the third SMF handles the UE joining into the MBS session according to the MBS information.

For example, the third SMF sends an SM message to the UPF serving the MBS session through the N4 interface. The SM message includes the updated MBS related information. The related information includes but is not limited to the MBS QoS flow information, and the information of a tunnel for receiving the MBS data. The third SMF sends an SM message to the RAN through the N2 interface, so that the RAN configures the tunnel for receiving the MBS data from the UPF and radio resources for communicating the MBS data with the UE according to the received SM message. The third SMF sends an SM message to the UE through the N1 interface, so that the UE determines to start receiving the MBS data according to the SM message.

After the third SMF releases the MBS session, there is a need to update information to the NRF, to delete the information of the MBS session from the information of the third SMF.

Embodiment 2: When the UE has established a PDU session, the AMF selects the SMF serving the MBS session.

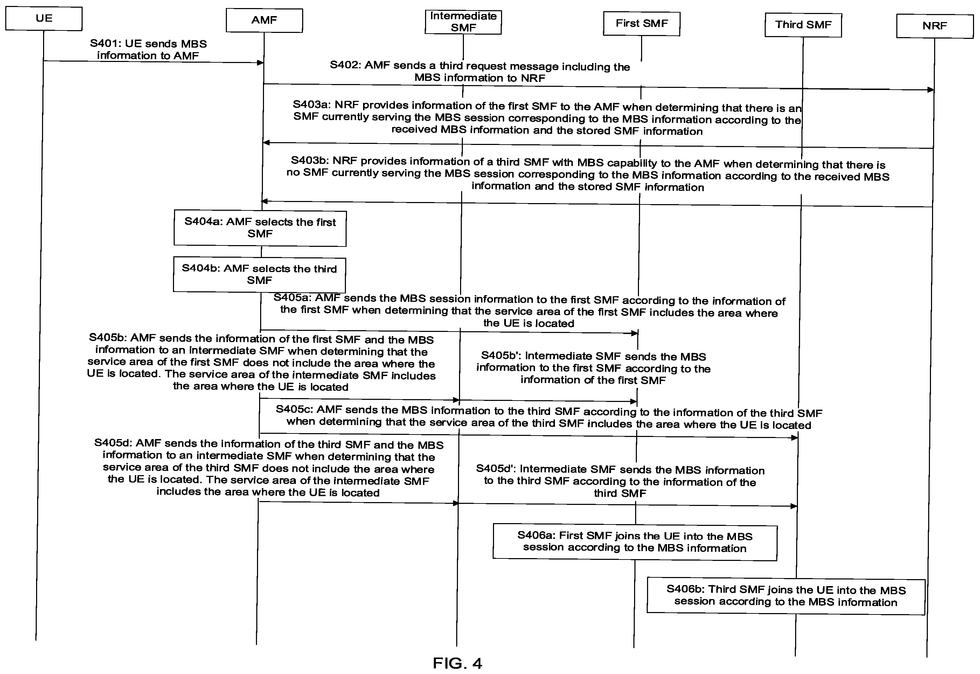

Referring to FIG. 4, a schematic flowchart of Embodiment 2 is provided.

S401: the UE sends a UL NAS Transport message carrying the MBS information to the AMF.

The UE can send the request information containing the MBS information to the AMF in any of the following ways.

In a first manner: the UE sends an Uplink Non-Access Stratum (UL NAS Transport) message to the AMF. The UL NAS Transport message carries the MBS information and an SM message that includes a PDU session modification request.

In a second manner: the UE sends a multicast join message to the UPF by using the user plane of the established PDU session. The multicast join message carries the MBS information. The UPF then sends a notification to a second SMF serving the PDU session. The notification carries the identification information of the UE and the MBS information. The second SMF initiates an AMF communication reroute (Namf_Communication_Reroute) request or an SMF PDU session update (Nsmf_PDUSession_Update) request to the AMF. The Namf_Communication_Reroute request or Nsmf_PDUSession_Update request carries the identification information of the UE and the MBS information.

S402: the AMF sends an Nnrf_NFDiscovery_Request including the MBS information to the NRF.

S403a: the NRF sends an Nnrf_NFDiscovery_Request response including the information of the first SMF to the AMF when determining that there is an SMF currently serving the MBS session corresponding to the MBS information according to the received MBS information and the stored SMF information.

S403b: the NRF sends an Nnrf_NFDiscovery_Request response including the information of a third SMF with MBS capability to the AMF when determining that there is no SMF currently serving the MBS session corresponding to the MBS information according to the received MBS information and the stored SMF information.

Before step 403a or step 403b is performed, the SMF registers or updates the information of the SMF with the NRF when establishing the MBS session. The information of the SMF includes the information of the MBS session. The SMF requests the NRF to update the information of the SMF when releasing the MBS session, where the step of updating the information of the SMF includes: deleting the information of the MBS session from the information of the SMF. The specific operation method has been described above and will not be repeated here.

S404a: the AMF selects the first SMF. S404b: the AMF selects a third SMF.

When step 404b is performed, if the NRF only provides the information of one third SMF, the AMF can directly select the third SMF; if the NRF provides the information of multiple third SMFs, the AMF can select a third SMF according to a preset local strategy. If the second SMF serving the PDU session also has the MBS capability, the AMF may preferentially select the second SMF.

Then, the selected third (or second) SMF updates information to the NRF, to add the information of the MBS session to the information of the third (or second) SMF.

S405a: the AMF sends an Nsmf_MBSSession_UpdateSMContext request or an Nsmf_PDUSession_CreateSMContext request, including the MBS information, to the first SMF according to the information of the first SMF when determining that the service area of the first SMF includes the area where the UE is located. The second SMF releases the PDU session.

If the first SMF selected by the AMF is not the second SMF serving the PDU session, the AMF sends the Nsmf_PDUSession_UpdateSMContext or Nsmf_PDUSession_ReleaseSMContext, carrying the identifier of the PDU session to the second SMF. After the second SMF transfers all the relevant parameters of the PDU session to the first SMF, the second SMF releases the PDU session. That is, the second SMF deletes the context of the PDU session. The first SMF serves the PDU session and the MBS session at the same time.

S405b: the AMF sends an Nsmf_PDUSession_CreateSMContext request or an Nsmf_MBSSession_CreateSMContext request, including the information of the first SMF, to an intermediate SMF when determining that the service area of the first SMF does not include the area where the UE is located. The service area of the intermediate SMF includes the area where the UE is located.

The AMF may select a SMF with the MBS capability from the locally configured SMFs as the intermediate SMF; or may query the NRF for an SMF that can serve the area where the UE is located and has the MBS capability as the intermediate SMF; or may use the second SMF with the MBS capability as the intermediate SMF. Then, the intermediate SMF may update information to the NRF, to add the information of the MBS session to the information of the intermediate SMF.

S405b': the intermediate SMF sends an Nsmf_MBSSession_Update request or an Nsmf_PDUSession_Create request including the MBS information to the first SMF according to the information of the first SMF.

S405c: the AMF sends an Nsmf_MBSSession_UpdateSMContext request or an Nsmf_PDUSession_CreateSMContext request including the MBS information to the third SMF according to the information of the third SMF when determining that the service area of the third SMF includes the area where the UE is located.

S405d: the AMF sends an Nsmf_PDUSession_CreateSMContext request or an Nsmf_MBSSession_CreateSMContext request including the information of the third SMF to an intermediate SMF when determining that the service area of the third SMF does not include the area where the UE is located. The service area of the intermediate SMF includes the area where the UE is located.

If the intermediate SMF selected by the AMF is the second SMF serving the PDU session, the AMF initiates an Nsmf_PDUSession_UpdateSMContext request or an Nsmf_MBSSession_CreateSMContext request to the second SMF. Both of two above-mentioned requests carry the identification information of the UE, the MBS information, the information of the first SMF and other information.

S405d': the intermediate SMF sends an Nsmf_MBSSession_Update request or an Nsmf_PDUSession_Create request including the MBS information to the third SMF according to the information of the third SMF.

If the intermediate SMF selected by the AMF is the second SMF serving the PDU session, the second SMF sends an Nsmf_MBSSession_Update request or an Nsmf_PDUSession_Create request to the first SMF. Both of two above-mentioned requests carry the identification information of the UE, the MBS information and other information.

S406a: the first SMF handles the UE joining into the MBS session according to the MBS information. S406b: the third SMF handles the UE joining into the MBS session according to the MBS information.

The process of the UE joining into the MBS session has been described in the Embodiment 1, and will not be repeated here.

Embodiment 3: When the UE has established a PDU session, the second SMF selects the SMF serving the MBS session.

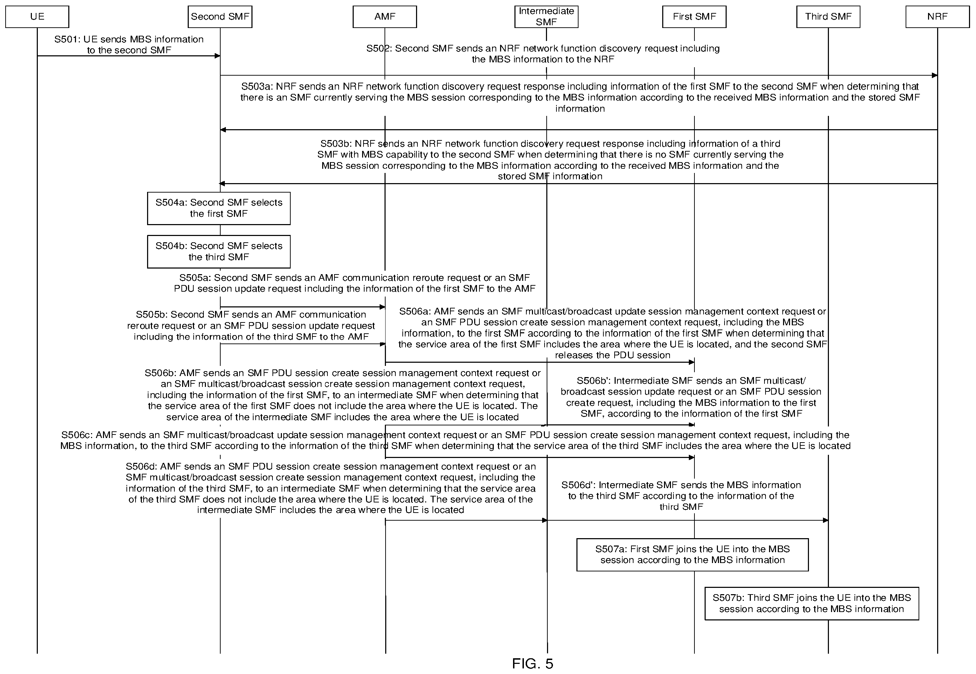

Referring to FIG. 5, a schematic flowchart of Embodiment 3 is provided.

S501: the UE sends the MBS information to the second SMF.

The UE sends a multicast join message to the UPF by using the user plane of the established PDU session. The multicast join message carries the MBS information. The UPF then sends a notification to a second SMF serving the PDU session. The notification carries the identification information of the UE and the MBS information.

S502: the second SMF sends an NRF network function discovery request (Nnrf_NFDiscovery_Request) including the MBS information to the NRF.

S503a: the NRF sends an NRF network function discovery request (Nnrf_NFDiscovery_Request) response including the information of the first SMF to the second SMF when determining that there is an SMF currently serving the MBS session corresponding to the MBS information according to the received MBS information and the stored SMF information.

S503b: the NRF sends an NRF network function discovery request (Nnrf_NFDiscovery_Request) response including the information of a third SMF with MBS capability to the second SMF when determining that there is no SMF currently serving the MBS session corresponding to the MBS information according to the received MBS information and the stored SMF information.

Before step 503a or step 503b is performed, the SMF registers or updates the information of the SMF with the NRF when establishing the MBS session. The information of the SMF includes the information of the MBS session. The SMF requests the NRF to update the information of the SMF when releasing the MBS session, where the step of updating the information of the SMF includes: deleting the information of the MBS session from the information of the SMF. The specific operation method has been described above and will not be repeated here.

S504a: the second SMF selects the first SMF. S504b: the second SMF selects a third SMF.

When step 504b is performed, if the NRF only provides the information of one third SMF, the second SMF can directly select the third SMF; if the NRF provides the information of multiple third SMFs, the second SMF can select a third SMF according to a preset local strategy. If the second SMF itself has the MBS capability, the second SMF preferentially selects itself as the third SMF to serve the MBS session.

Then, the selected third SMF may update information to the NRF, to add the information of the MBS session to the information of the third SMF.

S505a: the second SMF sends an AMF communication reroute (Namf_Communication_Reroute) request or an SMF PDU session update (Nsmf_PDUSession_Update) request including the information of the first SMF to the AMF.

S505b: the second SMF sends an Namf_Communication_Reroute request or an Nsmf_PDUSession_Update request including the information of the third SMF to the AMF.

S506a: the AMF sends an Nsmf_MBSSession_UpdateSMContext request or an Nsmf_PDUSession_CreateSMContext request including the MBS information to the first SMF according to the information of the first SMF when determining that the service area of the first SMF includes the area where the UE is located. The second SMF releases the PDU session.

If the first SMF selected by the second SMF is not the second SMF serving the PDU session, the AMF sends the Nsmf_PDUSession_UpdateSMContext or Nsmf_ PDUSession_ReleaseSMContext carrying the identifier of the PDU session to the second SMF. After the second SMF transfers all the relevant parameters of the PDU session to the first SMF, the second SMF releases the PDU session. That is, the second SMF deletes the context of the PDU session. The first SMF serves the PDU session and the MBS session at the same time.

S506b: the AMF sends an Nsmf_PDUSession_CreateSMContext request or an Nsmf_MBSSession_CreateSMContext request including the information of the first SMF to an intermediate SMF when determining that the service area of the first SMF does not include the area where the UE is located. The service area of the intermediate SMF includes the area where the UE is located.

The AMF may select a SMF with the MBS capability from the locally configured SMFs as the intermediate SMF; or may query the NRF for an MBS that can serve the area where the UE is located and has the MBS capability as the intermediate SMF; or may use the second SMF with the MBS capability as the intermediate SMF. Then, the intermediate SMF may update information to the NRF, to add the information of the MBS session to the information of the intermediate SMF.

S506b': the intermediate SMF sends an SMF multicast/broadcast session update (Nsmf_MBSSession_Update) request or an SMF PDU session create (Nsmf_PDUSession_Create) request including the MBS information to the first SMF according to the information of the first SMF.

S506c: the AMF sends an SMF multicast/broadcast update session management context (Nsmf_MBSSession_UpdateSMContext) request or an SMF PDU session create session management context (Nsmf_PDUSession_CreateSMContext) request including the MBS information to the third SMF according to the information of the third SMF when determining that the service area of the third SMF includes the area where the UE is located.

S506d: the AMF sends an Nsmf_PDUSession_CreateSMContext request or an SMF multicast/broadcast session create session management context (Nsmf_MBSSession_CreateSMContext) request including the information of the third SMF to an intermediate SMF when determining that the service area of the third SMF does not include the area where the UE is located. The service area of the intermediate SMF includes the area where the UE is located.

S506d': the intermediate SMF sends the MBS information to the third SMF according to the information of the third SMF. S507a: the first SMF handles the UE joining into the MBS session according to the MBS information. S507b: the third SMF handles the UE joining into the MBS session according to the MBS information.

The process of the UE joining into the MBS session has been described in the Embodiment 1, and will not be repeated here.

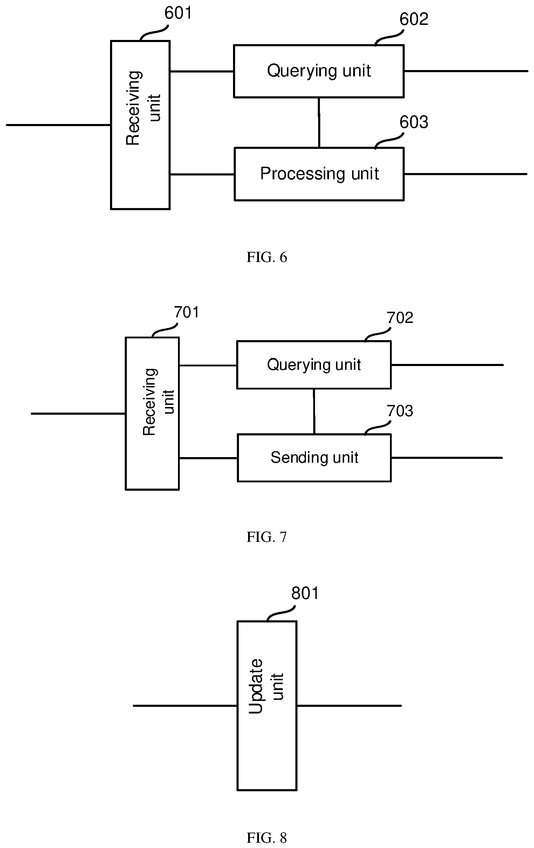

Based on the same inventive concept, embodiments of the present application provide an apparatus for joining an MBS session, which is applied to a network device. Referring to FIG. 6, the apparatus includes at least a receiving unit 601, a querying unit 602 and a processing unit 603.

The receiving unit 601 is configured to receive MBS information sent by a UE.

The querying unit 602 is configured to determine information of a first SMF that currently serves an MBS session corresponding to the MBS information according to the MBS information.

The processing unit 603 is configured to send the MBS information to the first SMF according to the information of the first SMF, so that the first SMF handles the UE joining into the MBS session.

Optionally, the network device is an AMF.

The receiving unit 601 is configured to:
receive a first request message including the MBS information sent by the UE; or
receive a second request message including the MBS information sent by a second SMF, wherein the second SMF is an SMF serving a PDU session of the UE.

Optionally, the network device is a second SMF. The second SMF is an SMF serving a PDU session of the UE.

The receiving unit 601 is configured to:
receive a third request message including the MBS information sent by a UPF, wherein the third request message is generated by the UPF based on the MBS information sent by the UE through the PDU session.

Optionally, the querying unit 602 is further configured to:
send a fourth request message including the MBS information to an NRF to query the NRF for the first SMF that currently serves the MBS session corresponding to the MBS information; and
receive the information of the first SMF sent by the NRF entity.

Optionally, the fourth request message further includes first information that includes some or all of:
network slice information, a data network name, a public land mobile network identifier, service area information.

Optionally, if the first SMF that currently serves the MBS session corresponding to the MBS information does not exist, the querying unit 602 is further configured to:
send a fourth request message including the MBS information to an NRF, and send the MBS information to a third SMF according to information of the third SMF provided by the NRF, so that the third SMF handles the UE joining into the MBS session; wherein the third SMF has an MBS capability.

Optionally, the network device is the AMF.

The processing unit 603 is configured to:
send the MBS information to the first SMF according to the information of the first SMF if a service area of the first SMF includes an area where the UE is located; or
send the information of the first SMF and the MBS information to an intermediate SMF if a service area of the first SMF does not include an area where the UE is located, so that the intermediate SMF sends the MBS information to the first SMF according to the information of the first SMF, wherein a service area of the intermediate SMF includes the area where the UE is located.

Optionally, the network device is a second SMF. The processing unit 603 is configured to:
send the information of the first SMF and the MBS information to the AMF, so that the AMF sends the MBS information to the first SMF according to the information of the first SMF.

Optionally, the MBS information includes some or all of:
an MBS multicast address, a temporary mobile group identity, an MBS session identifier.

Based on the same inventive concept, embodiments of the present application provide an apparatus for joining an MBS session, which is applied to an NRF. Referring to FIG. 7, the apparatus includes at least a receiving unit 701, a querying unit 702 and a sending unit 703.

The receiving unit 701 is configured to receive MBS information sent by a network device.

The querying unit 702 is configured to determine a first SMF according to the MBS information and stored SMF information, wherein the first SMF is an SMF that currently serves an MBS session corresponding to the MBS information.

The sending unit 703 is configured to provide information of the first SMF to the network device, so that the network device handles a UE joining into the MBS session through interactions with the first SMF.

Optionally, the querying unit 702 is further configured to:
provide information of a third SMF with an MBS capability to the network device if there is no SMF currently serving the MBS session corresponding to the MBS information, so that the network device handles the UE joining into the MBS session through interactions with the third SMF.

Optionally, the querying unit 702 is further configured to:
receive a fifth request message sent by the first SMF, wherein the fifth request message is used to register or update the information of the first SMF, and the information of the first SMF includes information of the MBS session.

Based on the same inventive concept, embodiments of the present application provide an apparatus for joining an MBS session, which is applied to an SMF. Referring to FIG. 8, the apparatus includes at least an update unit 801.

The update unit 801 is configured to register or update information of the SMF with an NRF when establishing an MBS session, wherein the information of the SMF includes information of the MBS session, so that the NRF provides information of the SMF that currently serves the MBS session to a network device.

Optionally, the update unit 801 is further configured to:
request the NRF to update the information of the SMF when releasing the MBS session, wherein updating the information of the SMF includes: deleting the information of the MBS session from the information of the SMF.

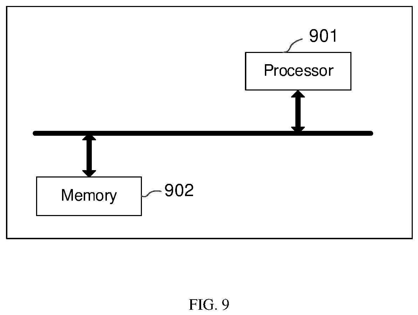

Based on the same inventive concept, embodiments of the present application provide an electronic device, as shown in FIG. 9, at least including a processor 901 and a memory 902, wherein the memory 902 stores program codes, which cause the processor 901 to perform the steps of any above method for joining the MBS session when executed by the processor.

Based on the same inventive concept, embodiments of the present application provide a computer readable storage medium including program codes. When the program product runs on an electronic device, the program codes are configured to cause the electronic device to perform the steps of any above method for joining the MBS session.

In some possible embodiments, various aspects of the service control method provided by the present application may also be implemented in the form of a program product, which includes program codes. When the program product runs on a computer device, the program codes are configured to cause the electronic device to perform the steps in the method for joining the MBS session according to various exemplary embodiments of the present application described above in this specification.

The program product may use any combination of one or more readable media. The readable medium may be a readable signal medium or a readable storage medium. The readable storage medium may be, for example but not limited to, electrical, magnetic, optical, electromagnetic, infrared, or semiconductor system, apparatus or device, or any combination thereof. More specific examples of the readable storage media (non-exhaustive list) include: electrical connection with one or more wires, portable disk, hard disk, Random Access Memory (RAM), Read Only Memory (ROM), Erasable Programmable Read Only Memory (EPROM) or flash memory, optical fiber, portable Compact Disk-Read Only Memory (CD-ROM), optical storage device, magnetic storage device, or any suitable combination thereof.

The program product for service control in the embodiment of the present application may adopt a portable Compact Disk-Read Only Memory (CD-ROM) and include program codes, and may be run on a computing device. However, the program product of the present application is not limited to this. In this document, the readable storage medium can be any tangible medium that contains or stores a program, where the program can be used by or used in combination with a command execution system, apparatus or device.

The readable signal medium may include data signals propagated in the baseband or as a part of carrier waves, and the readable program codes are beared therein. Such propagated data signals can be in many forms, including but not limited to electromagnetic signals, optical signals, or any suitable combination thereof. The readable signal medium may also be any readable medium other than the readable storage medium, and the readable medium may send, propagate or transmit the programs used by or used in combination with a command execution system, apparatus or device.

The program codes contained on the readable medium can be transmitted by any suitable medium, including but not limited to wireless, wired, optical cable, RF, etc., or any suitable combination thereof.

The program codes for performing the operations of the present application can be compiled in any combination of one or more programming languages, where the programming languages include the object-oriented programming languages such as Java, C++, etc., and also include the conventional procedural programming languages such as "C" language or similar programming languages. The program codes can be executed entirely on a user computing device, executed partly on a user computing device, executed as an independent software package, executed partly on a user computing device and partly on a remote computing device, or executed entirely on a remote computing device or server. In the case of a remote computing device, the remote computing device can be connected to the user computing device through any kind of network including Local Area Network (LAN) or Wide Area Network (WAN), or can be connected to an external computing device (for example, using the Internet service provider to connect via the Internet).

Although the preferred embodiments of the present application have been described, those skilled in the art can make additional alterations and modifications to these embodiments once they learn about the basic creative concepts. Thus the attached claims are intended to be interpreted to include the preferred embodiments as well as all the alterations and modifications falling within the scope of the present application.

## Claims

1. A method for joining a Multicast Broadcast Service, MBS, session, performed by a network device, wherein the method comprises:
receiving (S201), by the network device, MBS information sent by a User Equipment, UE;
determining according to the MBS information, by the network device, information of a first Session Management Function, SMF, that currently serves an MBS session corresponding to the MBS information; and
sending (S205), by the network device, the MBS information to the first SMF according to the information of the first SMF;
wherein said determining according to the MBS information, by the network device, information of the first SMF that currently serves the MBS session corresponding to the MBS information, comprises:
sending (S202), by the network device, a fourth request message including the MBS information to a Network Repository Function, NRF, to query the NRF for the information of the first SMF that currently serves the MBS session corresponding to the MBS information;
wherein the fourth request message comprises first information comprising some or all of:
network slice information, a data network name, a public land mobile network identifier, service area information.

2. The method of claim 1, wherein:
the network device is an Access and Mobility Management Function, AMF; and
said receiving, by the network device, the MBS information sent by the UE, comprises:
receiving, by the AMF, a first request message including the MBS information sent by the UE; or
receiving, by the AMF, a second request message including the MBS information sent by a second SMF, wherein the second SMF is an SMF serving a Protocol Data Unit, PDU, session of the UE.

3. The method of claim 1, wherein:
the network device is a second SMF,
wherein the second SMF is an SMF serving a PDU session of the UE; and
said receiving, by the network device, the MBS information sent by the UE, comprises:
receiving, by the second SMF, the MBS information sent by the UE; or
receiving, by the second SMF, a third request message including the MBS information sent by a User Plane Function, UPF, wherein the third request message is generated by the UPF based on the MBS information sent by the UE through the PDU session.

4. The method of any one of claims 1-2, wherein:
the network device is the AMF; and
said sending, by the network device, the MBS information to the first SMF according to the information of the first SMF, comprises:
sending, by the AMF, the MBS information to the first SMF according to the information of the first SMF when a service area of the first SMF comprises an area where the UE is located; or
sending, by the AMF, the information of the first SMF and the MBS information to an intermediate SMF when a service area of the first SMF does not comprise an area where the UE is located, so that the intermediate SMF sends the MBS information to the first SMF;
wherein a service area of the intermediate SMF comprises the area where the UE is located.

5. The method of any one of claims 1 and 3, wherein:
the network device is a second SMF; and
said sending, by the network device, the MBS information to the first SMF, comprises:
sending, by the second SMF, the information of the first SMF and the MBS information to an AMF, so that the AMF sends the MBS information to the first SMF.

6. The method of any one of claims 1-5, wherein the MBS information comprises some or all of:
an MBS multicast address, a temporary mobile group identity, an MBS session identifier.

7. A method for joining a Multicast Broadcast Service, MBS, session, performed by a Network Repository Function, NRF, wherein the method comprises:
receiving, by the NRF, fourth request message comprising MBS information sent by a network device;
determining (S203), by the NRF, a first SMF according to the MBS information and stored SMF information, wherein the first SMF is an SMF that currently serves an MBS session corresponding to the MBS information; and
providing (S204), by the NRF, information of the first SMF to the network device;
wherein the fourth request message comprises first information comprising some or all of:
network slice information, a data network name, a public land mobile network identifier, service area information;
wherein before the NRF receives the MBS information sent by the network device, the method further comprises:
receiving, by the NRF, a fifth request message sent by the first SMF;
wherein the fifth request message is used to register or update the information of the first SMF, and the information of the first SMF comprises information of the MBS session.

8. The method of claim 7, further comprising:
providing, by the NRF, information of a third SMF with an MBS capability to the network device when there is no SMF currently serving the MBS session corresponding to the MBS information, so that the network device handles the UE joining into the MBS session through interactions with the third SMF.

9. An electronic device comprising a processor and a memory, wherein the memory stores program codes, which cause the processor to perform the steps of the method of any one of claims 1-8 when executed by the processor.

## Patentansprüche

1. Verfahren zum Beitreten zu einer Multicast-Broadcast-Service-Sitzung, MBS-Sitzung, die durch eine Netzwerkvorrichtung durchgeführt wird, wobei das Verfahren Folgendes umfasst:
Empfangen (S201), durch die Netzwerkvorrichtung, von durch ein Benutzergerät, UE, gesendeten MBS-Informationen;
Bestimmen, gemäß den MBS-Informationen, durch die Netzwerkvorrichtung, von Informationen einer ersten Session Management Function, SMF, die aktuell eine den MBS-Informationen entsprechende MBS-Sitzung bedient; und
Senden (S205), durch die Netzwerkvorrichtung, der MBS-Informationen an die erste SMF gemäß den Informationen der ersten SMF;
wobei das Bestimmen, gemäß den MBS-Informationen, durch die Netzwerkvorrichtung, von Informationen der ersten SMF, die aktuell die den MBS-Informationen entsprechende MBS-Sitzung bedient, Folgendes umfasst:
Senden (S202), durch die Netzwerkvorrichtung, einer vierten Anforderungsnachricht, die die MBS-Informationen beinhaltet, an eine Network Repository Function, NRF, um die NRF nach den Informationen der ersten SMF, die aktuell die den MBS-Informationen entsprechende MBS-Sitzung bedient, abzufragen;
wobei die vierte Anforderungsnachricht erste Informationen umfasst, die einige oder alle von folgenden Informationen umfassen:
Netzwerk-Slice-Informationen, einem Datennetzwerknamen, einer Kennung eines öffentlichen landgestützten Mobilfunknetzes, Versorgungsbereichsinformationen.

2. Verfahren nach Anspruch 1, wobei:
die Netzwerkvorrichtung eine Access and Mobility Management Function, AMF, ist; und
das Empfangen, durch die Netzwerkvorrichtung, der durch das UE gesendeten MBS-Informationen Folgendes umfasst:
Empfangen, durch die AMF, einer ersten Anforderungsnachricht, die die durch das UE gesendeten MBS-Informationen beinhaltet; oder
Empfangen, durch die AMF, einer zweiten Anforderungsnachricht, die die durch eine zweite SMF gesendeten MBS-Informationen beinhaltet, wobei die zweite SMF eine SMF ist, die eine Protocol-Data-Unit-Sitzung, PDU-Sitzung, des UE bedient.

3. Verfahren nach Anspruch 1, wobei:
die Netzwerkvorrichtung eine zweite SMF ist,
wobei die zweite SMF eine SMF ist, die eine PDU-Sitzung des UE bedient; und
das Empfangen, durch die Netzwerkvorrichtung, der durch das UE gesendeten MBS-Informationen Folgendes umfasst:
Empfangen, durch die zweite SMF, der durch das UE gesendeten MBS-Informationen; oder
Empfangen, durch die zweite SMF, einer dritten Anforderungsnachricht, die die durch eine User Plane Function, UPF, gesendeten MBS-Informationen beinhaltet, wobei die dritte Anforderungsnachricht durch die UPF basierend auf den durch das UE durch die PDU-Sitzung gesendeten MBS-Informationen erzeugt wird.

4. Verfahren nach einem der Ansprüche 1-2, wobei:
die Netzwerkvorrichtung die AMF ist; und
das Senden, durch die Netzwerkvorrichtung, der MBS-Informationen an die erste SMF gemäß den Informationen der ersten SMF Folgendes umfasst:
Senden, durch die AMF, der MBS-Informationen an die erste SMF gemäß den Informationen der ersten SMF, wenn ein Versorgungsbereich der ersten SMF einen Bereich umfasst, in dem sich das UE befindet; oder
Senden, durch die AMF, der Informationen der ersten SMF und der MBS-Informationen an eine Zwischen-SMF, wenn ein Versorgungsbereich der ersten SMF keinen Bereich umfasst, in dem sich das UE befindet, so dass die Zwischen-SMF die MBS-Informationen an die erste SMF sendet;
wobei ein Versorgungsbereich der Zwischen-SMF den Bereich umfasst, in dem sich das UE befindet.

5. Verfahren nach einem der Ansprüche 1 und 3, wobei:
die Netzwerkvorrichtung eine zweite SMF ist; und
das Senden, durch die Netzwerkvorrichtung, der MBS-Informationen an die erste SMF Folgendes umfasst:
Senden, durch die zweite SMF, der Informationen der ersten SMF und der MBS-Informationen an eine AMF, so dass die AMF die MBS-Informationen an die erste SMF sendet.

6. Verfahren nach einem der Ansprüche 1-5, wobei die MBS-Informationen einige oder alle von folgenden Informationen umfassen:
einer MBS-Multicast-Adresse, einer Temporary Mobile Group Identity, einer MBS-Sitzungskennung.

7. Verfahren zum Beitreten zu einer Multicast-Broadcast-Service-Sitzung, MBS-Sitzung, die durch eine Network Repository Function, NRF, durchgeführt wird, wobei das Verfahren Folgendes umfasst:
Empfangen, durch die NRF, einer vierten Anforderungsnachricht, die durch eine Netzwerkvorrichtung gesendete MBS-Informationen umfasst;
Bestimmen (S203), durch die NRF, einer ersten SMF gemäß den MBS-Informationen und gespeicherten SMF-Informationen, wobei die erste SMF eine SMF ist, die aktuell eine den MBS-Informationen entsprechende MBS-Sitzung bedient; und
Bereitstellen (S204), durch die NRF, von Informationen der ersten SMF für die Netzwerkvorrichtung;
wobei die vierte Anforderungsnachricht erste Informationen umfasst, die einige oder alle von folgenden Informationen umfassen:
Netzwerk-Slice-Informationen, einem Datennetzwerknamen, einer Kennung eines öffentlichen landgestützten Mobilfunknetzes, Versorgungsbereichsinformationen;
wobei, bevor die NRF die durch die Netzwerkvorrichtung gesendeten MBS-Informationen empfängt, das Verfahren ferner Folgendes umfasst:
Empfangen, durch die NRF, einer durch die erste SMF gesendeten fünften Anforderungsnachricht;
wobei die fünfte Anforderungsnachricht verwendet wird, um die Informationen der ersten SMF zu registrieren oder zu aktualisieren, und die Informationen der ersten SMF Informationen der MBS-Sitzung umfassen.

8. Verfahren nach Anspruch 7, das ferner Folgendes umfasst:
Bereitstellen, durch die NRF, von Informationen einer dritten SMF mit einer MBS-Fähigkeit für die Netzwerkvorrichtung, wenn keine SMF aktuell die den MBS-Informationen entsprechende MBS-Sitzung bedient, so dass die Netzwerkvorrichtung das Beitreten des UE zu der MBS-Sitzung durch Interaktionen mit der dritten SMF handhabt.

9. Elektronische Vorrichtung, die einen Prozessor und einen Speicher umfasst, wobei der Speicher Programmcodes speichert, die bewirken, dass der Prozessor die Schritte des Verfahrens nach einem der Ansprüche 1-8 durchführt, wenn sie durch den Prozessor ausgeführt werden.

## Revendications

1. Procédé pour rejoindre une session MBS (Multicast Broadcast Service), exécuté par un dispositif réseau, le procédé comprenant les étapes suivantes :
recevoir (S201), par le dispositif réseau, des informations MBS émises par un équipement utilisateur, UE ;
déterminer, en fonction des informations MBS, par le dispositif réseau, des informations d'une première fonction de gestion de session, SMF, qui dessert actuellement une session MBS correspondant aux informations MBS ; et
envoyer (S205), par le dispositif réseau, les informations MBS à la première SMF en fonction des informations de la première SMF ;
où ladite détermination, en fonction des informations MBS, par le dispositif réseau, d'informations de la première SMF servant actuellement la session MBS correspondant aux informations MBS, comprend l'étape suivante :
envoyer (S202), par le dispositif réseau, un quatrième message de demande incluant les informations MBS à une fonction de référentiel réseau, NRF, pour interroger la NRF concernant les informations de la première SMF qui dessert actuellement la session MBS correspondant aux informations MBS ;
où le quatrième message de demande comprend des premières informations comprenant tout ou partie parmi :
des informations de tranche de réseau, un nom de réseau de données, un identifiant de réseau mobile terrestre public, des informations de zone de service.

2. Procédé selon la revendication 1, dans lequel :
le dispositif réseau est une fonction de gestion des accès et de la mobilité, AMF ; et
ladite réception, par le dispositif réseau, des informations MBS émises par l'UE, comprend les étapes suivantes :
recevoir, par l'AMF, un premier message de demande comprenant les informations MBS envoyées par l'UE ; ou
recevoir, par l'AMF, un deuxième message de demande comprenant les informations MBS envoyées par une deuxième SMF, la deuxième SMF étant une SMF desservant une session d'unité de données de protocole, PDU, de l'UE.

3. Procédé selon la revendication 1, dans lequel :
le dispositif réseau est une deuxième SMF,
où la deuxième SMF est une SMF desservant une session PDU de l'UE ; et
ladite réception, par le dispositif réseau, des informations MBS émises par l'UE, comprend les étapes suivantes :
recevoir, par la deuxième SMF, les informations MBS envoyées par l'UE ; ou
recevoir, par la deuxième SMF, un troisième message de demande comprenant les informations MBS envoyées par une fonction de plan utilisateur, UPF, le troisième message de demande étant généré par l'UPF sur la base des informations MBS envoyées par l'UE par l'intermédiaire de la session PDU.

4. Procédé selon l'une quelconque des revendications 1 et 2, dans lequel :
le dispositif réseau est l'AMF ; et
ledit envoi, par le dispositif réseau, des informations MBS à la première SMF en fonction des informations de la première SMF, comprend les étapes suivantes :
envoyer, par l'AMF, les informations MBS à la première SMF en fonction des informations de la première SMF lorsqu'une zone de service de la première SMF comprend une zone où se trouve l'UE ; ou
envoyer, par l'AMF, les informations de la première SMF et les informations MBS à une SMF intermédiaire lorsqu'une zone de service de la première SMF ne comprend pas de zone où se trouve l'UE, de sorte que la SMF intermédiaire envoie les informations MBS à la première SMF ;
où une zone de service de la SMF intermédiaire comprend la zone où se trouve l'UE.

5. Procédé selon l'une quelconque des revendications 1 et 3, dans lequel :
le dispositif réseau est une deuxième SMF ; et
ledit envoi, par le dispositif réseau, des informations MBS à la première SMF, comprend l'étape suivante :
envoyer, par la deuxième SMF, les informations de la première SMF et les informations MBS à une AMF, de sorte que l'AMF envoie les informations MBS à la première SMF.

6. Procédé selon l'une quelconque des revendications 1 à 5, dans lequel les informations MBS comprennent une partie ou la totalité des éléments suivants :
une adresse de multidiffusion MBS, une identité temporaire de groupe mobile, un identifiant de session MBS.

7. Procédé pour rejoindre une session MBS (Multicast Broadcast Service) exécuté par une fonction de référentiel réseau, NRF, le procédé comprenant les étapes suivantes :
recevoir, par la NRF, un quatrième message de demande comprenant des informations MBS envoyées par un dispositif réseau ;
déterminer (S203), par la NRF, une première SMF en fonction des informations MBS et des informations SMF stockées, la première SMF étant une SMF qui sert actuellement une session MBS correspondant aux informations MBS ; et
fournir (S204), par la NRF, des informations de la première SMF au dispositif réseau ;
où le quatrième message de demande comprend des premières informations comprenant tout ou partie parmi :
des informations de tranche de réseau, un nom de réseau de données, un identifiant de réseau mobile terrestre public, des informations de zone de service ;
où, avant que la NRF ne reçoive les informations MBS envoyées par le dispositif réseau, le procédé comprend en outre l'étape suivante :
recevoir, par la NRF, un cinquième message de demande envoyé par la première SMF ;
où le cinquième message de demande est utilisé pour enregistrer ou mettre à jour les informations de la première SMF, et les informations de la première SMF comprennent des informations de la session MBS.

8. Procédé selon la revendication 7, comprenant en outre l'étape suivante :
fournir, par la NRF, des informations d'une troisième SMF avec une capacité MBS au dispositif réseau lorsqu'aucune SMF ne dessert actuellement la session MBS correspondant aux informations MBS, de sorte que le dispositif réseau gère l'UE rejoignant la session MBS par l'intermédiaire d'interactions avec la troisième SMF.

9. Dispositif électronique comprenant un processeur et une mémoire, dans lequel la mémoire stocke des codes de programme, qui amènent le processeur à exécuter les étapes du procédé selon l'une quelconque des revendications 1 à 8 lorsqu'il est exécuté par le processeur.
